# EUROPEAN PATENT SPECIFICATION

(11) **EP 2 212 764 B1**
(45) Date of publication and mention of the grant of the patent: **14.06.2017**
(21) Application number: 08808121.1
(22) Date of filing: 06.10.2008
(51) Int. Cl.: G06F 3/044, G06K 9/00

(54) **METHOD FOR PALM TOUCH IDENTIFICATION IN MULTI-TOUCH DIGITIZING SYSTEMS**
VERFAHREN ZUR HANDFLÄCHENBERÜHRUNGSIDENTIFIKATION IN MEHRFACHBERÜHRUNGS-DIGITALISIERUNGSSYSTEMEN
PROCÉDÉ PERMETTANT UNE IDENTIFICATION D'UN TOUCHER DE LA PAUME DANS DES SYSTÈMES DE NUMÉRISATION À MULTIPLES TOUCHERS

(30) Priority: 11.10.2007 US 960714 P
(43) Date of publication of application: 04.08.2010
(73) Proprietor: Microsoft Technology Licensing, LLC, Redmond, WA 98052 (US)
(72) Inventor: ZACHUT, Rafi, 75684 Rishon-Lezion (IL); KAPLAN, Amir, 45044 Hod-Hasharon (IL); WOHLSTADTER, Gil, 53444 Givataim (IL)
(74) Representative: Dennemeyer & Associates S.A.
(86) International application number: PCT/IL2008/001325
(87) International publication number: WO 2009/047759

(56) References cited:
- EP-A- 1 717 677
- EP-A- 1 980 935
- WO-A-2007/088939
- WO-A-2007/089766

## Description

### FIELD OF THE INVENTION

The present invention relates to multi-touch digitizer systems, and more particularly to fingertip input detection in multi-touch digitizer systems.

### BACKGROUND OF THE INVENTION

Touch technologies are commonly used as input devices for a variety of products. The usage of touch devices of various kinds is growing sharply due to the emergence of new mobile devices such as Personal Digital Assistants (PDA), tablet PCs and wireless Flat Panel Display (FPD) screen displays. These new devices are usually not connected to standard keyboards, mice or like input devices, which are deemed to limit their mobility. Instead there is a tendency to use touch sensitive digitizers of one kind or another. A stylus and/or fingertip may be used as a user touch.

US Patent No. 6,690,156 entitled "Physical Object Location Apparatus and Method and a Platform using the same" and US Patent No. 7,292,229 entitled "Transparent Digitizer" both of which are assigned to N-trig Ltd., the contents of both which are incorporated herein by reference, describe an electro-magnetic method for locating one or more physical objects on a FPD and a transparent digitizer that can be incorporated into an electronic device, typically over the active display screen. The digitizer sensor includes a matrix of vertical and horizontal conductive lines to sense an electric signal. Positioning the physical object at a specific location on the digitizer provokes a signal whose position of origin may be detected.

US Patent No. 7,372,455, entitled "Touch Detection for a Digitizer" assigned to N-Trig Ltd., the contents of which is incorporated herein by reference, describes a detector for detecting both a stylus and touches by fingers or like body parts on a
digitizer sensor. The detector typically includes a digitizer sensor with a grid of sensing conductive lines, a source of oscillating electrical energy at a predetermined frequency, and detection circuitry for detecting a capacitive influence on the sensing conductive line when the oscillating electrical energy is applied, the capacitive influence being interpreted as a touch. The detector is capable of simultaneously detecting multiple finger touches.

US Patent Application Publication No. 20070062852, entitled "Apparatus for Object Information Detection and Methods of Using Same" assigned to N-Trig Ltd., the contents of which is incorporated herein by reference, describes a digitizer sensor sensitive to capacitive coupling and objects adapted to create a capacitive coupling with the sensor when a signal is input to the sensor. A detector associated with the sensor detects an object information code of the objects from an output signal of the sensor. Typically the object information code is provided by a pattern of conductive areas on the object.

US Patent Application Publication No. 20070285404, entitled "Fingertip Touch Recognition for a Digitizer" assigned to N-Trig Ltd., the contents of which is incorporated herein by reference, describes a method for verifying a fingertip touch input to a digitizer by comparing a pattern of signals obtained from conductive lines of a digitizer sensor to pre-determined fingertip characteristics of patterns for fingertip touch.

US Patent Application Publication No. 20060097991, entitled "Multipoint Touch Screen", the contents of which is incorporated herein by reference, describes a touch panel having a transparent capacitive sensing medium configured to detect multiple touches or near touches that occur at the same time and at distinct locations in the plane of the touch panel and to produce distinct signals representative of the location of the touches on the plane of the touch panel for each of the multiple touches.

European Patent Publication EP1717684 and EP1717677, both entitled, "Method and apparatus for integrating manual input" the contents of which is incorporated herein by reference, describe an apparatus and methods for simultaneously tracking multiple finger and palm contacts as hands approach, touch, and slide across a proximity-sensing, compliant, and flexible multi-touch surface. Segmentation processing of each proximity image constructs a group of electrodes corresponding to each distinguishable contact and extracts shape, position and surface proximity features for each group. Groups in successive images which correspond to the same hand contact are linked by a persistent path tracker which also detects individual contact touchdown and liftoff.

### SUMMARY OF THE INVENTION

An aspect of some embodiments of the present invention is the provision of a method for differentiating between fingertip input and input by other capacitive objects, e.g. palm, hand, arm, knuckles, and other body parts, on a multi-touch sensitive digitizer. According to some embodiments of the present invention, input includes input by touch and/or input by hovering.

An aspect of some embodiments of the present invention is the provision of a method as claimed in the appended claims. Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is an exemplary simplified block diagram of a digitizer system in accordance with some embodiments of the present invention;
FIG. 2 is a schematic illustration of a digitizer sensor for fingertip touch detection based on a capacitive touch method for detecting fingertip touch in accordance with some embodiments of the present invention;
FIG. 3 is a schematic illustration of touch regions detected in response to a hand resting on a digitizer sensor in accordance with some embodiments of the present invention;
FIG. 4 shows an exemplary flow chart of a method for identifying fingertip touch on a multi-touch digitizer sensor in the presence of a palm in accordance with some embodiments of the present invention;
FIG. 5 shows an exemplary flow chart of a method for identifying and characterizing touch regions detected on a digitizer sensor in accordance with some embodiments of the present invention;
FIG. 6 shows an exemplary flow chart of a method for positively identifying fingertip touch regions from one or more potential fingertip touch regions in accordance with some embodiments of the present invention.

### DESCRIPTION OF SPECIFIC EMBODIMENTS OF THE INVENTION

The present invention relates to multi-touch digitizer systems and more particularly to fingertip detection in multi-touch digitizer systems.

An aspect of some embodiments of the present invention is the provision of methods for differentiating between input from fingertip touch and input resulting from palm touch on a multi-touch digitizer system. In some exemplary embodiments, input resulting from palm touch also includes artifact regions that are not actual touch region but that typically surround palm touch or other large area touch regions According to some embodiments of the present invention, digitizer system includes a digitizer sensor with parallel line crossed grids where positions are defined as junctions. However, it is noted that the invention is applicable to any digitizing system that detects multiple positions, e.g., capacitive or contact touch pads. The present inventors have found that a plurality of distinct touch regions may be detected on some digitizers when a palm and/or hand touches and/or hovers over the digitizer sensor. Detection of multiple touch regions from a palm may be a result of the three dimensional contour of a palm and/or weight distribution of the palm leaning on the digitizer sensor. The present inventors have found that detection due to palm touch may include a combination of large and small regions and that some of the smaller regions may be misinterpreted as fingertip touch. The present inventors have found that typically the smaller regions surround the larger regions. The smaller areas may be due the three dimensional contour of the palm or may be due to artifacts that tend to appear around larger area touch.

According to some embodiments of the present invention, there is provided a method for determining that a detected touch region corresponds to palm touch or fingertip touch based on analysis of an image formed from the pattern of signal amplitudes detected on an array of conductive lines, conducting lines or conductors of the digitizer sensor. According to some embodiments of the present invention, image segmentation is performed on the image to identify a plurality of discrete touch regions on the digitizer sensor.

According to some exemplary embodiments, identified regions having extents, e.g. areas, below a pre-defined area are defined as potential fingertip touch regions. In some exemplary embodiments, areas between 16 mm² and 500-1000 mm² are identified as potential fingertip touch regions and areas below 16 mm² are ignored. According to some embodiments, the identified touch regions above a pre-defined size are identified as palm touch regions. Typically, palm touch regions are not forwarded to the host computer. In some exemplary embodiments, input detected from an area immediately surrounding the detected palm region is not used for user interaction, e.g. is not forwarded to the host computer. In some exemplary embodiments, size is determined by the number of pixels, e.g. conductive line junctions, included in the identified region. In some exemplary embodiments, size of the identified region is approximated by a rectangle defined by the number of conductive lines on each of the orthogonal axes from which user input is detected for a particular region.

The present inventors have found that fingertip touch regions are typically distanced from a larger hand, palm or other body part touch region. For example while a user rests his and/or her palm on a digitizing surface and uses a pointer finger of that same hand for user interaction, a large palm region typically is detected on the palm cushion region and/or near the user's wrist which is typically significantly distanced from the fingertip of the pointer finger used for user interaction with the digitizer. In another example, if a user rests one hand on the digitizer sensor and then uses a finger from another hand for user interaction, a user will typically lift the hand resting on the digitizer sensor before pointing with the finger to a region proximal to the resting hand.

According to some embodiments of the present invention, a potential fingertip touch region, e.g. a small touch region, that is within a pre-defined distance from an identified palm touch region is characterized as part of a palm touch and is not used for user interaction with the digitizer. In some exemplary embodiment, a potential touch region that has a palm touch region within a pre-defined distance from its centroid, e.g. a distance corresponding to a pre-defined number of junctions, is considered part of a palm touch region and is not qualified as fingertip touch region. Typically, the pre-defined number of junctions is a function of the resolution of the digitizer sensor. In some exemplary embodiments, the pre-defined number of junctions is 8-12, e.g. 10, with distance of 4 mm between parallel conductive lines. In some exemplary embodiments, the centroid is determined from weighted averages of the amplitudes of the detected signals in the two orthogonal axes.

The present inventors have found that although fingertip touch typically drains current from the proximal and/or touched junction so that signal amplitude detected in response to fingertip touch is typically lower than a base-line amplitude, signal amplitudes obtained from touch from larger areas, e.g. a palm region, may include one or more outputs from junctions where the amplitude is higher than base-line amplitude. One explanation may be that during interrogation of the lines, signals may be transmitted over the hand causing an increase in the output signal over some regions. Therefore, both positive and negative outputs may be obtained in detected touch regions when examining normalized outputs of signal amplitudes, e.g. normalized by the base-line amplitude.

In some exemplary embodiments, the signal amplitudes examined are compared to a pre-defined base-line amplitude and/or are normalized by subtracting the base-line amplitude from the detected amplitude of the output or dividing the amplitude by the base-line amplitude. The base-line amplitude is defined herein as amplitude obtained from an interrogated junction in the absence of user touch. Typically, the base-line amplitude is defined as an average amplitude obtained from an interrogated junction in the absence of user touch. Typically the base-line amplitude associated with each junction in the digitizer sensor is determined during a calibration procedure and saved in memory.

In some exemplary embodiments, additional characteristics are used to classify regions of detection as either fingertip touch regions or palm touch regions. In some exemplary embodiments the plurality of conditions include shape of the region, signal amplitude in the region, and spatial positioning of the region in relation to other identified touch regions. In some exemplary embodiments, a shape scale is determined that is a ratio of the number of conductive lines in the long axis over number of conductive lines in the short axis of the touch region from which output is detected. In some exemplary embodiments, a region having a shape scale greater than 2:1 or 3:1 is disqualified as a potential fingertip touch region. In some exemplary embodiments, the aspect ratio of the potential fingertip touch region is determined and an aspect ratio greater than 2:1 or 3:1 is disqualified as a potential fingertip touch region. In some exemplary embodiments, a region including outputs having amplitudes above the base-line signal is disqualified as a potential fingertip touch region and characterized as output from palm touch. In some exemplary embodiments, a region that overlaps an area defined around the palm touch region is disqualified as a fingertip touch region and characterized as output from palm touch. In some exemplary embodiments, the area defined around the palm touch region is a rectangular area whose dimensions are the dimensions of the region defined by the number of junctions projected on each of the orthogonal axes of the conductive lines.

It is noted that although some embodiments of present invention refer to input to the digitizer sensor through touch, methods described herein can also be applied to input to the digitizer sensor through hovering over the digitizer sensor. It is also noted that although some embodiments of present invention refer to palm detection, the methods described herein can also be applied to identification of input from other body parts not intended for user interaction with the digitizer.

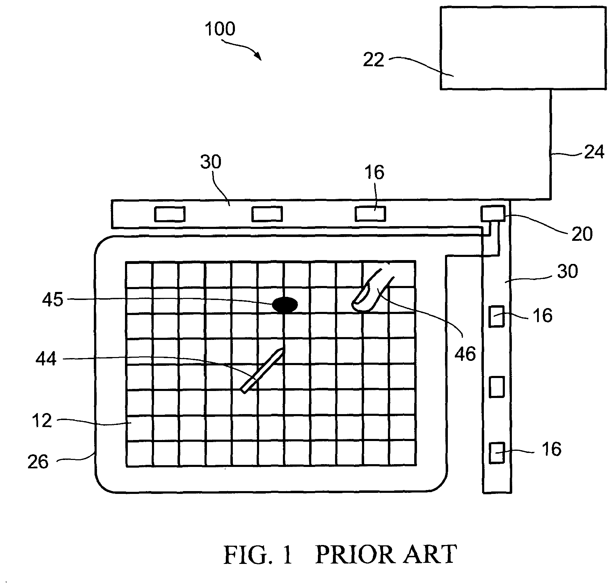

Referring now to the drawings, FIG. 1 illustrating an exemplary simplified block diagram of a digitizer system in accordance with some embodiments of the present invention. The digitizer system 100 may be suitable for any computing device that enables touch input between a user and the device, e.g. mobile and/or desktop and/or tabletop computing devices that include, for example, FPD screens. Examples of such devices include Tablet PCs, pen enabled lap-top computers, tabletop computer, PDAs or any hand held devices such as palm pilots and mobile phones or other devices that facilitate electronic gaming. According to some embodiments of the present invention, the digitizer system comprises a sensor 12 including a patterned arrangement of conductive lines, which is optionally transparent, and which is typically overlaid on a FPD. Typically sensor 12 is a grid based sensor including horizontal and vertical conductive lines.

According to some embodiments of the present invention, circuitry is provided on one or more PCB(s) 30 positioned around sensor 12. According to some embodiments of the present invention PCB 30 is an 'L' shaped PCB. According to some embodiments of the present invention, one or more ASICs 16 positioned on PCB(s) 30 comprises circuitry to sample and process the sensor's output into a digital representation. The digital output signal is forwarded to a digital unit 20, e.g. digital ASIC unit also on PCB 30, for further digital processing. According to some embodiments of the present invention, digital unit 20 together with ASIC 16 serves as the controller of the digitizer system and/or has functionality of a controller and/or processor. Output from the digitizer sensor is forwarded to a host 22 via an interface 24 for processing by the operating system or any current application.

According to some embodiments of the present invention, digital unit 20 together with ASIC 16 includes memory and/or memory capability. Memory capability may include volatile and/or non-volatile memory, e.g. FLASH memory. In some embodiments of the present invention, the memory unit and/or memory capability, e.g. FLASH memory is a unit separate from the digital unit 20 but in communication with digital unit 20.

According to some embodiments of the present invention, sensor 12 comprises a grid of conductive lines made of conductive materials, optionally Indium Tin Oxide (ITO), patterned on a foil or glass substrate. The conductive lines and the foil are optionally transparent or are thin enough so that they do not substantially interfere with viewing an electronic display behind the lines. Typically, the grid is made of two layers, which are electrically insulated from each other. Typically, one of the layers contains a first set of equally spaced parallel conductive lines and the other layer contains a second set of equally spaced parallel conductive lines orthogonal to the first set. Typically, the parallel conductive lines are input to amplifiers included in ASIC 16. Optionally the amplifiers are differential amplifiers.

Typically, the parallel conductive lines are spaced at a distance of approximately 2-8 mm, e.g. 4mm, depending on the size of the FPD and a desired resolution. Optionally the region between the grid lines is filled with a non-conducting material having optical characteristics similar to that of the (transparent) conductive lines, to mask the presence of the conductive lines. Optionally, the ends of the lines remote from the amplifiers are not connected so that the lines do not form loops. In some exemplary embodiments, the digitizer sensor is constructed from conductive lines that form loops.

Typically, ASIC 16 is connected to outputs of the various conductive lines in the grid and functions to process the received signals at a first processing stage. As indicated above, ASIC 16 typically includes an array of amplifiers to amplify the sensor's signals. Additionally, ASIC 16 optionally includes one or more filters to remove frequencies that do not correspond to frequency ranges used for excitation and/or obtained from objects used for user touches. Optionally, filtering is performed prior to sampling. The signal is then sampled by an A/D, optionally filtered by a digital filter and forwarded to digital ASIC unit 20, for further digital processing. Alternatively, the optional filtering is fully digital or fully analog.

According to some embodiments of the invention, digital unit 20 receives the sampled data from ASIC 16, reads the sampled data, processes it and determines and/or tracks the position of physical objects, such as a stylus 44 and a token 45 and/or a finger 46, and/or an electronic tag touching the digitizer sensor from the received and processed signals. According to some embodiments of the present invention, digital unit 20 determines the presence and/or absence of physical objects, such as stylus 44, and/or finger 46 over time. In some exemplary embodiments of the present invention hovering of an object, e.g. stylus 44, finger 46 and hand, is also detected and processed by digital unit 20. Calculated position and/or tracking information are sent to the host computer via interface 24.

According to some embodiments of the invention, host 22 includes at least a memory unit and a processing unit to store and process information obtained from ASIC 16, digital unit 20. According to some embodiments of the present invention memory and processing functionality may be divided between any of host 22, digital unit 20, and/or ASIC 16 or may reside in only host 22, digital unit 20 and/or there may be a separated unit connected to at least one of host 22, and digital unit 20. According to some embodiments of the present invention, one or more tables and/or databases may be stored to record statistical data and/or outputs, e.g. images or patterned outputs of sensor 12, sampled by ASIC 16 and/or calculated by digitizer unit 20. In some exemplary embodiments, a database of statistical data from sampled output signals may be stored. Data and/or signal values may be stored in volatile and nonvolatile memory. According to some embodiments of the present invention, base-line amplitude values for junctions of digitizer sensor 12 are determined during a calibration procedure and stored in memory, e.g. in memory associated with digital unit 20.

In some exemplary embodiments of the invention, an electronic display associated with the host computer displays images. Optionally, the images are displayed on a display screen situated below a surface on which the object is placed and below the sensors that sense the physical objects or fingers. In some exemplary embodiments of the invention, the surface functions as a game board and the object is a gaming piece, or a toy. Optionally, the object represents a player or object taking part in the game. In some embodiments of the invention, the objects are hand held objects. In other embodiments, the objects move autonomously on the surface and may be controlled by a controller via a wired or wireless connection. In some embodiments of the invention, movement of the objects is controlled by a robotic device controlled by a host or remotely via the internet.

### Stylus Detection and Tracking

According to some embodiments of the invention, digital unit 20 produces and controls the timing and sending of a triggering pulse to be provided to an excitation coil 26 that surrounds the sensor arrangement and the display screen. The excitation coil provides a trigger pulse in the form of an electric or electromagnetic field that excites passive circuitry in stylus 44 or other object used for user touch to produce a response from the stylus that can subsequently be detected. In some exemplary embodiments, stylus detection and tracking is not included and the digitizer sensor only functions as a capacitive sensor to detect the presence of fingertips, body parts and conductive objects, e.g. tokens.

### Fingertip Detection and Tracking

According to some embodiments, digital unit 20 produces and sends a triggering pulse to at least one of the conductive lines. Typically the triggering pulses and/or signals are analog pulses and/or signals. According to some embodiments of the present invention, the triggering pulse and/or signal implemented may be confined to one or more pre-defined frequencies, e.g. 18 KHz or 20-40 KHz. In some exemplary embodiments, finger touch detection is facilitated when sending a triggering pulse to the conductive lines.

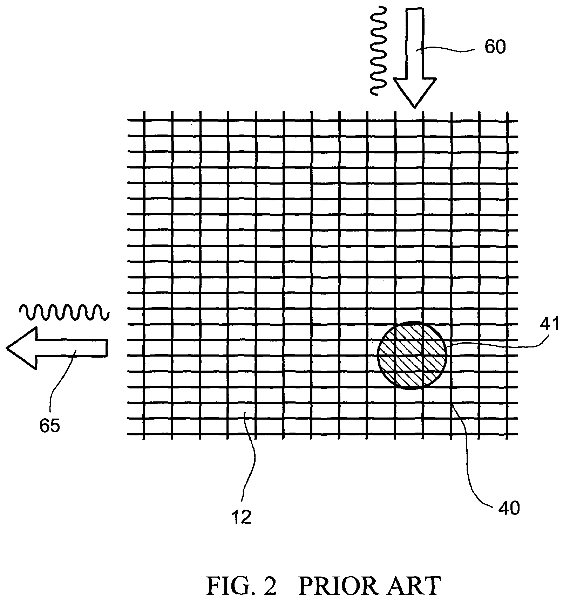

Reference is now made to FIG. 2 which schematically illustrates a capacitive touch method for fingertip touch detection using a digitizer sensor according to some embodiments of the present invention. At each junction, e.g. junction 40 in sensor 12 a certain capacitance exists between orthogonal conductive lines. In an exemplary embodiment, an AC signal 60 is applied to one or more parallel conductive lines in the two-dimensional sensor matrix 12. When a finger 41 touches the sensor at a certain position where signal 60 is induced on a line, the capacitance between the conductive line through which signal 60 is applied and the corresponding orthogonal conductive lines at least proximal to the touch position increases and signal 60 crosses by virtue of the capacitance of finger 41 to corresponding orthogonal conductive lines to producing a lower amplitude signal 65, e.g. lower in reference to a base-line amplitude. This method is able to detect more than one finger touch and/or capacitive object at the same time (multi-touch). This method further enables calculating touch area. In exemplary embodiments of the present invention, each conductive line is input to an amplifier and output is sampled from the output of the amplifier. Optionally, each line is input to a differential amplifier, while the other input to the amplifier is ground. Typically, the presence of a finger decreases the coupled signal by 15-20% or 15-30% since the finger typically drains current from the lines to ground. In some exemplary embodiments, amplitude of the signal within a bandwidth of 18-40 KHz is examined to detect fingertip touch.

### Token Detection and Tracking

In some exemplary embodiments of the invention, the apparatus is further capable of detecting and tracking a position of one or more physical objects 45 including one or more small conductive elements placed on a surface object in contact with the digitizer surface, e.g. tokens. In some exemplary embodiments, detection of tokens is performed in a similar manner to fingertip detection. In an exemplary embodiment, an AC signal 60 is applied to one or more parallel conductive lines in the two-dimensional sensor matrix 12 and output is sampled on the orthogonal lines to detect a coupled signal (FIG. 2). Typically in response to a token positioned over and/or near a junction between two orthogonal conductive lines, a coupled signal at the junction is increased by about 5-10%, apparently by increasing the capacitive coupling between activated and passive conductive line. Preferably, the object comprises a geometric arrangement of tokens that is used to identify the physical object.

The present invention is not limited to the technical description of the digitizer system described herein. Digitizer systems used to detect stylus and/or fingertip location may be, for example, similar to digitizer systems described in incorporated U.S. Patent No. 6,690,156, U.S. Patent Application Publication No. 20040095333 and/or U.S. Patent Application Publication No. 20040155871. It will also be applicable to other digitized systems and touch screens known in the art, depending on their construction, especially to systems capable of multi-touch detection.

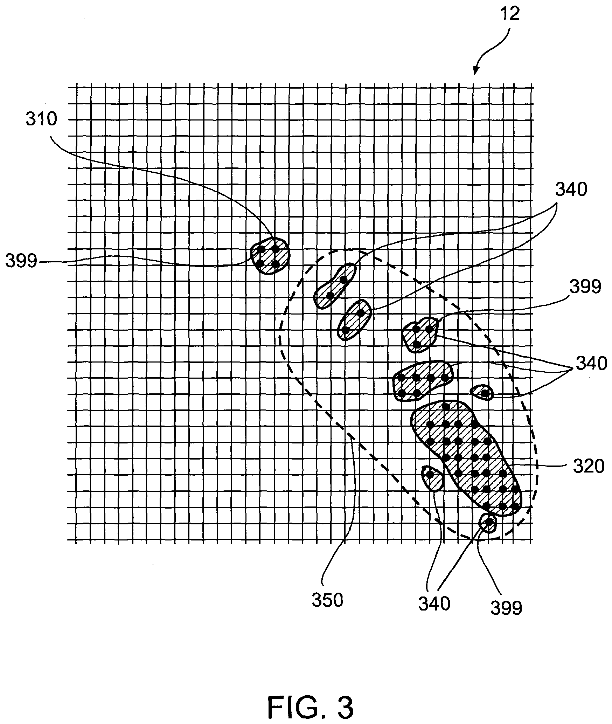

Reference is now made to FIG. 3 showing a schematic illustration of touch regions detected in response to a hand resting on a digitizer sensor in accordance with some embodiments of the present invention. According to some embodiments of the present invention, a user may rest a palm on the digitizer sensor while using a fingertip to interact with the digitizer. According to some embodiments of the present invention, input detected on the digitizer sensor includes detected regions 350 from the palm input as well as a detected region 310 from the fingertip input. According to some embodiments of the present invention detected region 350 from the palm includes a plurality of regions. According to some embodiments of the present invention, the plurality of regions includes one or more large area region 320 and small area regions 340. In some exemplary embodiments, the small area regions result from artifacts signals. In some exemplary embodiments, the small area regions result from portions of the hand and/or palm that are only partially touching the digitizer sensor, e.g. knuckles. According to some embodiments of the present invention, the regions are identified as a plurality of contiguous junctions 399 having similar output.

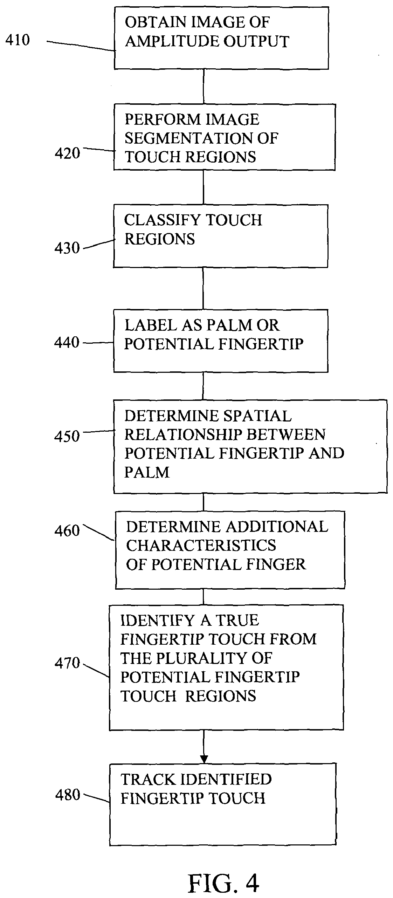

Reference is now made to FIG. 4 showing an exemplary flow chart of a method for identifying fingertip touch on a multi-touch digitizer sensor in the presence of a palm in accordance with some embodiments of the present invention. According to some embodiments of the present invention, junctions of the digitizer sensor are interrogated and an image is constructed from the amplitude output obtained from each of the junctions of the digitizer sensor (block 410). Optionally, an image is constructed from the amplitude and phase output obtained from each of the junctions of the digitizer sensor. Typically, junctions of the sensor are interrogated by sequentially transmitting a triggering signal to each of a set of parallel lines of the digitizer sensor and sampling output from each conductive line orthogonal to the set. Typically, the output signals from the orthogonal conductive lines are sampled simultaneously. The output sampled depicts output from the junction created between the trigger line and the sampled line. In some exemplary embodiments, the amplitude output of the junction is equated to a pixel value of an image. In some exemplary embodiments, the amplitude is normalized by the base-line amplitude. According to some embodiments of the present invention, image segmentation is performed to pick out, e.g. identify, one or more touch regions from the image (block 420) and/or artifact regions that may appear to be touch regions. Typically, image segmentation defines regions on an image having similar properties, e.g. pixel values. Typically, each segmented region corresponds to a touch region on the digitizer sensor.

According to some embodiments of the present invention, each segmented region, e.g. touch region, is characterized and/or identified by one or more determined properties (block 430). According to some exemplary embodiments, each touch region is assigned an identity number, e.g. a serial number {1, 2, 3,}. In some exemplary embodiments, each pixel within the touch region is labeled with the identity number. According to some embodiments of the present invention, the area of each touch region is determined and is used as a property to characterize the touch region. In some exemplary embodiments, area is determined by the number of pixels, e.g. junctions, included in the touch region. In some exemplary embodiments, area of the touch region is defined by an area of a rectangle whose length and width correspond to the length of width of the touch region along the orthogonal axes of the digitizer sensor. According to some embodiments of the present invention, the centroid of the touch region is determined and used to characterize the touch region. Typically the centroid is determined by calculating the weighted average of the amplitude outputs obtained at each of the junctions in the touch region. According to some embodiments of the present invention a table listing all detected touch regions is stored in memory. According to some embodiments of the present invention, the table includes properties used to characterize each touch region, e.g. area, and centroid, aspect ratio. In some exemplary embodiments, pixels not associated with a touch region are labeled with a null value, e.g. -1, while each pixel associated with a touch region is labeled with the identity number of its associated touch region. In some exemplary embodiments, labeled pixels are used to identify a touch region that is in a vicinity of a potential fingertip touch region.

According to some embodiments of the present invention, each segmented region is classified either as a potential fingertip touch or a palm touch region (block 440) based on its spatial characteristics such as its size, shape and/or aspect ratio. According to some embodiments of the present invention the classifying is based on the calculated area of each segment. In some exemplary embodiments, segmented regions smaller than a pre-defined size are ignored and/or labeled with a null value. According to some exemplary embodiments, segmented regions having a size approximately between 16 mm²-500 mm² or a size approximately between 16 mm²-1000 mm² are classified as potential fingertip touch regions and larger segmented regions are classified as palm touch regions.

According to some embodiments of the present invention, the spatial relationship between each of the potential fingertip touch segments and the palm touch regions is considered when determining which of the potential fingertip touch segments are actually part of a palm touch input and which if any are actual fingertip touch input intended for user interaction (block 450). According to some embodiments of the present invention, the spatial relationship includes the distance between each of the potential fingertip touch segments and the palm touch regions. According to some embodiments of the present invention, the spatial relationship includes the orientation of potential fingertip touch segments respect to a palm touch segment. According to some embodiments of the present invention, potential fingertip touch segments that are within a pre-defined vicinity of a palm touch segment are disqualified as real fingertip touch regions. According to some embodiments of the present invention, a portion of the potential fingertip touch regions are not actual touch regions but result from artifact signals around a large area touch region, e.g. a palm touch region.

According to some embodiments of the present inventions, additional characteristics of a potential fingertip touch segment is determined to verify that it is a really fingertip touch region (block 460). In some exemplary embodiments, the shape of the potential fingertip touch segment is examined and/or the amplitude output is examined and compared to typical shapes or outputs associated with fingertip touch. In some exemplary embodiments, the shape of the potential fingertip touch segment is determined from the aspect ratio data, e.g. for aspect ratio closer to 1:2 or 1:3, an elliptic shape is determined while for aspect ratio closer to 1:1, a round shape is determined.

According to some embodiments of the present invention, one or more potential fingertip touch regions are verified as real fingertip touch regions and are to be used for user interaction with the digitizer (block 470). According to some embodiments of the present invention, the verified fingertip touch regions are located and optionally tracked (block 480). In some exemplary embodiments, the identified location of a fingertip touch is the centroid of the touch segment. According to some embodiments of the present invention, disqualified regions and/or regions associated with palm input are not forwarded to the host computer and are not tracked.

According to some exemplary embodiments, a portion of the potential fingertip regions that were disqualified as fingertip touch are tracked over a few samples to determine based on the tracking if the potential fingertip regions is a really obtained from fingertip input. In some exemplary embodiments, if based on tracking, e.g. if the tracking path is a feasible and/or typical finger tracking path, it is determined that the region is obtained from fingertip input, the input is qualified for user interaction, e.g. the input from the region is transmitted to the host computer.

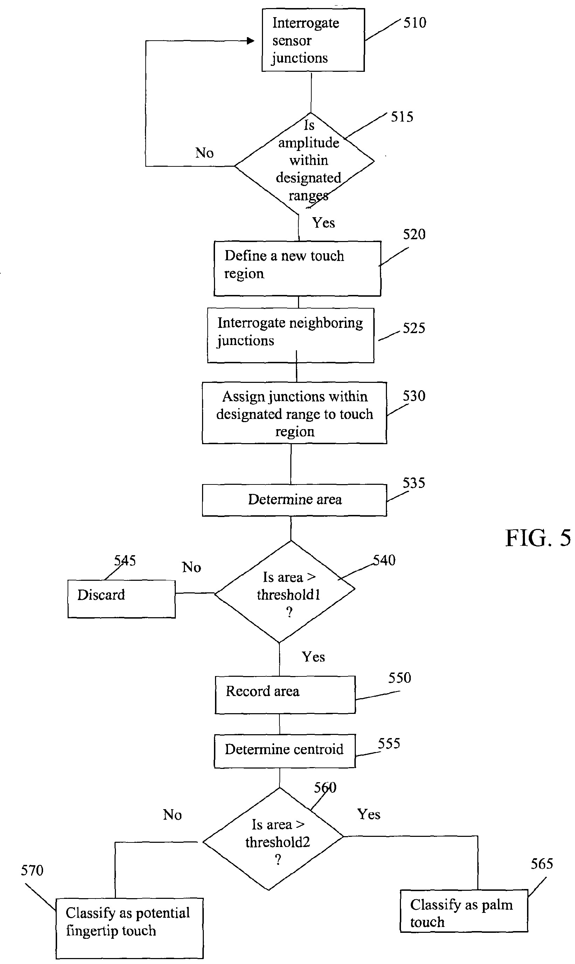

Reference is now made to FIG. 5 showing an exemplary flow chart of a method for identifying and classifying one or more touch regions detected on a digitizer sensor in accordance with some embodiments of the present invention. According to some exemplary embodiments, the method described in FIG. 5 is an exemplary method for image segmentation. According to some embodiments of the present invention, each line and/or junction of a digitizer is interrogated (block 510) until an output above a pre-defined threshold is detected on at least one junction (block 515).

According to some embodiments of the present invention, magnitudes of normalized signal amplitudes, e.g. normalized with base-line amplitude, are compared to the threshold. According to some exemplary embodiment, the amplitude of the signal is compared to a first and second threshold. In some exemplary embodiment, the first pre-defined threshold is 0.8%-0.95% of the base-line amplitude. In some exemplary embodiments, the second pre-defined threshold is 1.02%-1.10% of the base-line amplitude. Amplitudes below the first threshold or above the second threshold constitute identification of a new touch region (block 520).

According to some embodiments of the present invention, in response to positive detection, neighboring junctions are interrogated to determine if their amplitude is below the first threshold or above the second threshold (block 525). According to some embodiments, neighboring junctions with signal amplitudes within the two threshold regions are included as part of a potential palm interaction region (block 530).

In other exemplary embodiments, all outputs within a touch region are required to be either above the base-line amplitude or all outputs within a touch region or below the base-line amplitude. In such cases, more segmented regions typically having smaller areas will be identified.

In some exemplary embodiments, a segmented region, i.e. touch region, may include a limited number of junctions, e.g. 3-6 junctions having outputs that are not within the pre-defined range required to be part of the segmented region.

According to some embodiments of the present invention, the area and/or size of the touch region is determined (block 535). A query is made to determine if the size of the touch region is smaller than a threshold used as a lower limit for fingertip touch, e.g. 16 mm² (block 540). If so, the touch region is discarded or ignored (block 545). Otherwise the touch region is recorded (block 550). Typically, the area associated with the touch region is stored as well. In some embodiments, the centroid of the touch region is determined (block 555) and stored.

According to some embodiments of the present invention, a query is made based on touch region area (block 560), a touch regions, having an area and/or including a number of junctions above a pre-defined threshold is defined as a palm touch region (block 565) and touch regions having an area below the pre-defined threshold is classified as a potential fingertip touch region (block 570). In some exemplary embodiments, a palm touch region is defined for regions including 50 or more junctions when the distance between junctions is 4 mm. In some exemplary embodiments, a potential fingertip touch region is defined for regions including less than 50 junctions when the distance between junctions is 4 mm. Typically fingertip touch includes 1-12 junctions when the distance between junctions is 4 mm. According to some embodiments of the present invention, the method described in FIG. 5 is repeated until the entire area of the digitizer sensor has been scanned and all touch regions have been detected.

In some exemplary embodiments, the pattern of amplitudes is first analyzed, e.g. segmented, to detect potential fingertip regions and then analyzed, e.g. segmented, to detect palm touch regions. According to some embodiments of the present invention, the pattern of amplitudes, included in potential fingertip touch regions are required to be below the base-line amplitude. According to some embodiments of the present invention, the pattern of amplitudes, included in palm touch regions can include amplitudes that are below and/or above the base-line amplitude.

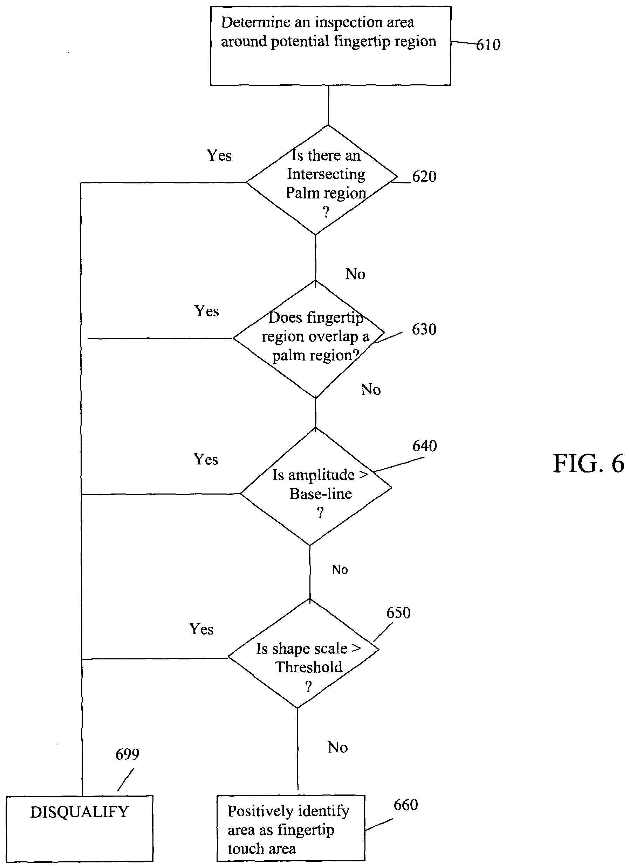

Reference is now made to FIG. 6 showing an exemplary flow chart of a method for positively identifying fingertip touch regions from one or more potential fingertip touch regions in accordance with some embodiments of the present invention. According to some embodiments of the present invention, a defined area surrounding each potential fingertip touch region is examined to determine if a palm touch region, e.g. a portion of it, is present within that area (block 610). In some exemplary embodiments, the defined area is defined by a distance from the centroid of the potential finger tip touch region.

According to some embodiments of the present invention, a query is made to determine if a palm touch region is within the vicinity of a potential fingertip touch region (block 620). In some exemplary embodiments, when a junction and/or a pixel of a palm touch region is found within the defined area around the potential fingertip touch region, the potential fingertip touch region is characterized as being part of a palm touch region and is not qualified as a fingertip touch region. Potential fingertip touch regions that are close to a palm region are disqualified and not used for user interaction (block 699).

According to some embodiments of the present invention, the distance from a potential fingertip touch region and/or the vicinity around a potential finger touch region is defined by a square region centered on the centroid of the potential finger touch region. In some exemplary embodiments, the square region is centered about a junction closest to the calculated centroid. In some exemplary embodiments, the dimension of the square is approximately 70-90 mm², e.g. 80 mm². In some exemplary embodiments, the dimensions of the square correspond to approximately 20X20 pixels where the distance between the pixels is 4 mm.

According to some embodiments of the present invention, a palm touch region that is within the area defined around a potential fingertip touch region is identified by examining pixel labels, e.g. pixel labels identifying segmented regions, of pixels within the defined area and/or along the perimeter of the defined area. According to some embodiments of the present invention, in response to identification of a pixel labeled with a value other than a null value, the area of the identified segmented region is checked. If the segmented region is a palm touch region the potential fingertip touch region is classified as part of palm touch. In some exemplary embodiments, only pixels along the perimeter of the defined square region are checked to determine if a palm touch region is within the vicinity defined by the square. In some exemplary embodiments, random pixels within the area of the square are also checked. It is noted that although some embodiments of the inventions is described in reference to a square area surrounding the potential fingertip region, other areas may be defined, e.g. circular areas, elliptical areas, hexagonal area and octagonal area.

According to some embodiments of the present invention, a query is made to determine if a potential fingertip touch region is partially encompassed by an area defined around a palm touch region (block 630). In some exemplary embodiments, the area is the rectangular area defined by the number of junctions projected on each of the orthogonal axes. Potential fingertip touch regions that are partially encompassed by a palm touch region are disqualified and/or ignored (block 699).

According to some embodiments of the present invention, the amplitude of the output in the potential fingertip touch region is compared to the base-line amplitude (block 640). Typically, fingertip touch is characterized by a decrease in the base-line amplitude, e.g. a decrease by 10-15%. According to some embodiments of the present invention, potential fingertip touch regions that include output that is above the base-line amplitude is discarded and not used for user interaction with the digitizer sensor. In some exemplary embodiments, touch regions including output that is above the base-line amplitude may result from tokens positioned on the digitizer sensor. According to some embodiments of the present invention, touch regions that include output that is above the base-line amplitude is classified as palm and/or hand touch region and discarded, i.e. not used for user interaction with the digitizer sensor.

In some exemplary embodiments, the smoothness of the pattern of amplitudes formed in a potential fingertip touch region is used to determine if a potential fingertip touch region should be qualified or disqualified. The present inventors have found that the pattern of amplitudes formed in a real fingertip touch region is typically a dome with a peak in the vicinity of the centroid of the region while the pattern of amplitudes formed from palm and/or hand touch region may be more irregular.

The present inventors have found that touch regions may result from a knuckle and/or thumb resting on the digitizer sensor. These regions may typically be distanced from large palm touch regions but are regions that are not intended for user interaction. The present inventors have found that the shape of such touch regions can typically be distinguished from fingertip touch. For example, the present inventors have found that touch not intended for user interaction may typically include a more oblong region as compared to fingertip touch regions. According to some embodiments of the present invention, a shape scale of the potential fingertip touch region is determined and compared to a threshold (block 650). In some exemplary embodiments the shape scale is the ratio of the number of conductive lines junctions in the long axis over number of detected lines in the short axis of the touch region. In some exemplary embodiments, a region having a shape scale outside the range of 1:1 and 3:1 is disqualified as a potential fingertip touch region.

According to some embodiments of the present invention, potential fingertip touch regions that have not been discarded and/or disqualified are positively identified as fingertip touch regions and are qualified for user interaction (block 660).

The terms "comprises", "comprising", "includes", "including", "having" and their conjugates mean "including but not limited to".

The term "consisting of' means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

## Claims

1. A method for classifying input to a multi-touch sensitive digitizer that is obtained from a body part as inputs invalid for user interaction and inputs valid for user interaction, the method comprising:
identifying a plurality of discrete regions of input to a digitizer sensor;
determining sizes of each of the plurality of discrete regions;
identifying one of the identified discrete regions as a palm input region, wherein the palm input region has an area above a pre-defined area threshold;
identifying another one of the identified discrete regions as a potential fingertip touch region, wherein the potential fingertip touch region has an area below the pre-defined area threshold;
determining proximity between the palm input region and the potential fingertip touch region from the plurality of identified discrete regions; and
classifying the potential fingertip touch region as either a valid input region or an invalid input region based on the proximity determined, wherein the potential fingertip touch region is classified as a valid input region responsive to the potential fingertip touch region being a pre-defined distance from the palm input region.

2. The method according to claim 1 comprising determining at least one spatial characteristic of the potential fingertip touch region and classifying the potential fingertip touch region as either a valid input region or an invalid input region based on both the proximity determined and the characteristic determined, wherein the spatial characteristic is selected from a group including: size, shape, and aspect ratio.

3. The method according to claim 1, comprising determining a centroid of the potential fingertip touch area region and using it to determine the proximity between the palm input region and the potential fingertip touch region.

4. The method according to claim 3, wherein the proximity is determined within an area defined around the potential fingertip touch region.

5. The method according to any of claims 1-4, wherein the valid input region is obtained from a fingertip touching or hovering over the digitizer sensor.

6. The method according to any of claims 1-5 comprising using only the valid input region for user interaction with the digitizer.

7. The method according to any of claims 1-6, wherein the digitizer sensor includes two orthogonal sets of parallel conductive lines forming a plurality of junctions there between from which the input is received.

8. The method according to claim 7, wherein input to the digitizer sensor is detected by a capacitive touch detection method.

9. The method according to claim 7 or claim 8, comprising detecting a pattern of signal amplitudes from the conductive lines of the digitizer sensor;
forming a two-dimensional image of signal amplitudes from the pattern of signal amplitudes, and wherein pixels of the image correspond to the signal amplitude at each of the junctions.

10. The method according to claim 9 comprising: performing image segmentation on the image to identify the plurality of discrete regions.

11. The method according to any of claims 7-10, wherein sizes of the regions are defined by at least one of the number junctions included in the regions and a rectangular areas surrounding the regions, the rectangular areas having dimensions defined by a number of conductive lines on each of the orthogonal axes from which user input is detected.

12. The method according to any of claims 8-11, comprising:
classifying the potential fingertip touch region as either the valid input region or the invalid input region based on both the proximity determined and amplitude level within the regions, wherein the amplitude level is compared to a base-line amplitude of the junctions within the regions, wherein the base-line amplitude of a junction is an amplitude at that junction in the absence of user input; and
wherein the potential fingertip touch region is classified as an invalid input region in response to both the distance to the palm input region being above a pre-defined distance and the potential fingertip touch region including amplitudes above their base-line amplitudes.

## Patentansprüche

1. Verfahren zum Klassifizieren von Eingaben in einen für mehrfache Berührungen empfindlichen Digitalisierer, die von einem Körperteil erzielt werden, als für eine Benutzerinteraktion ungültige Eingaben und als für eine Benutzeraktion gültige Eingaben, wobei das Verfahren folgende Schritte umfasst:
Identifizieren einer Vielzahl von diskreten Eingaberegionen für einen Digitalisierungssensor;
Bestimmen der Größen jeder der Vielzahl von diskreten Regionen;
Identifizieren einer der identifizierten diskreten Regionen als eine Handflächeneingaberegion, wobei die Handflächeneingaberegion eine Fläche oberhalb einer vordefinierten Flächenschwelle aufweist;
Identifizieren einer anderen der identifizierten diskreten Regionen als eine mögliche Fingerspitzenberührungsregion, wobei die mögliche Fingerspitzenberührungsregion eine Fläche aufweist, die unterhalb der vordefinierten Flächenschwelle liegt;
Bestimmen der Nähe zwischen der Handflächeneingaberegion und der möglichen Fingerspitzenberührungsregion aus der Vielzahl von identifizierten diskreten Regionen; und
Klassifizieren der möglichen Fingerspitzenberührungsregion als entweder eine gültige Eingaberegion oder eine ungültige Eingaberegion basierend auf der bestimmten Nähe, wobei die mögliche Fingerspitzenberührungsregion als Reaktion darauf, dass sich die mögliche Fingerspitzenberührungsregion in einem vorbestimmten Abstand von der Handflächeneingaberegion befindet, als eine gültige Eingaberegion klassifiziert wird.

2. Verfahren nach Anspruch 1, umfassend das Bestimmen mindestens eines räumlichen Kennzeichens der möglichen Fingerspitzenberührungsregion und das Klassifizieren der möglichen Fingerspitzenberührungsregion entweder als eine gültige Eingaberegion oder als eine ungültige Eingaberegion basierend sowohl auf der bestimmten Nähe als auch auf dem bestimmten Kennzeichen, wobei das räumliche Kennzeichen aus einer Gruppe ausgewählt wird, die Folgendes umfasst: Größe, Form und Seitenverhältnis.

3. Verfahren nach Anspruch 1, umfassend das Bestimmen eines Schwerpunkts der möglichen Fingerspitzenberührungsregion und das Verwenden desselben, um die Nähe zwischen der Handflächeneingaberegion und der möglichen Fingerspitzenberührungsregion zu bestimmen.

4. Verfahren nach Anspruch 3, wobei die Nähe innerhalb einer Fläche bestimmt wird, die um die mögliche Fingerspitzenberührungsregion herum definiert ist.

5. Verfahren nach einem der Ansprüche 1 bis 4, wobei die gültige Eingaberegion daraus erzielt wird, dass eine Fingerspitze den Digitalisierungssensor berührt oder darüber schwebt.

6. Verfahren nach einem der Ansprüche 1 bis 5, umfassend das Verwenden nur der gültigen Eingaberegion für eine Benutzerinteraktion mit dem Digitalisierer.

7. Verfahren nach einem der Ansprüche 1 bis 6, wobei der Digitalisierungssensor zwei orthogonale Sätze von parallelen Leiterbahnen umfasst, die eine Vielzahl von Verbindungsstellen dazwischen bilden, von denen die Eingabe empfangen wird.

8. Verfahren nach Anspruch 7, wobei die Eingabe für den Digitalisierungssensor durch ein kapazitives Berührungsdetektionsverfahren detektiert wird.

9. Verfahren nach Anspruch 7 oder 8, umfassend folgende Schritte:
Detektieren eines Musters von Signalamplituden aus den Leiterbahnen des Digitalisierungssensors;
Bilden eines zweidimensionalen Bildes von Signalamplituden aus dem Muster von Signalamplituden, und wobei die Pixel des Bildes der Signalamplitude an jeder der Verbindungsstellen entsprechen.

10. Verfahren nach Anspruch 9, umfassend das Ausführen einer Bildsegmentierung in dem Bild, um die Vielzahl von diskreten Regionen zu identifizieren.

11. Verfahren nach einem der Ansprüche 7 bis 10, wobei die Größen der Regionen durch mindestens eines von der Anzahl von Verbindungsstellen, die in den Regionen enthalten sind, und rechteckigen Flächen, welche die Regionen umgeben, definiert werden, wobei die rechteckigen Flächen Dimensionen aufweisen, die durch eine Anzahl von Leiterbahnen auf jeder der orthogonalen Achsen, von der eine Benutzereingabe detektiert wird, definiert sind.

12. Verfahren nach einem der Ansprüche 8 bis 11, umfassend folgende Schritte:
Klassifizieren der möglichen Fingerspitzenberührungsregion entweder als die gültige Eingaberegion oder als die ungültige Eingaberegion basierend sowohl auf der bestimmten Nähe als auch auf dem Amplitudenpegel innerhalb der Regionen, wobei der Amplitudenpegel mit einer Basislinienamplitude der Verbindungsstellen innerhalb der Regionen verglichen wird, wobei die Basislinienamplitude einer Verbindungsstelle eine Amplitude an dieser Verbindungsstelle ist, wenn keine Benutzereingabe vorhanden ist; und
wobei die mögliche Fingerspitzenberührungsregion als Reaktion darauf, dass sowohl der Abstand zu der Handflächeneingaberegion oberhalb eines vordefinierten Abstands liegt als auch die mögliche Fingerspitzenberührungsregion Amplituden oberhalb ihrer Basislinienamplituden umfasst, als eine ungültige Eingaberegion klassifiziert wird.

## Revendications

1. Procédé de classification d'une entrée d'un numériseur multi-tactile qui est obtenue de la part d'une partie d'un corps sous forme d'entrées invalides pour une interaction avec un utilisateur et d'entrées valides pour une interaction avec un utilisateur, le procédé comprenant :
l'identification d'une pluralité de zones discrètes d'une entrée d'un capteur de numériseur ;
la détermination des dimensions de chacun de la pluralité de zones discrètes ;
l'identification de l'une des zones discrètes identifiées comme étant une zone d'entrée de paume, la zone d'entrée de paume ayant une superficie supérieure à un seuil de superficie prédéfini ;
l'identification d'une autre des zones discrètes identifiées comme étant une zone de toucher potentielle, la zone de toucher potentiel ayant une superficie inférieure au seuil de superficie prédéfini ;
la détermination d'une proximité entre la zone d'entrée de paume et la zone de toucher potentielle parmi la pluralité de zones discrètes identifiées ; et
la classification de la zone de toucher potentielle comme étant une zone d'entrée valide ou une zone d'entrée invalide sur la base de la proximité déterminée, la zone de toucher potentielle étant classifiée comme une zone d'entrée valide en réponse au fait que la zone de toucher potentielle soit à une distance prédéfinie de la zone d'entrée de paume.

2. Procédé selon la revendication 1 comprenant la détermination d'au moins une caractéristique spatiale de la zone de toucher potentielle et la classification de la zone de toucher potentielle comme étant une zone d'entrée valide ou une zone d'entrée invalide sur la base de la proximité déterminée et de la caractéristique déterminée, la caractéristique spatiale étant choisie parmi un groupe comprenant : la taille, la forme et le rapport d'aspect.

3. Procédé selon la revendication 1, comprenant la détermination d'un centroïde de la zone de toucher potentielle et son utilisation afin de déterminer la proximité entre a zone d'entrée de paume et la zone de toucher potentielle.

4. Procédé selon la revendication 3, dans lequel la proximité est déterminée dans une zone définie autour de la zone de toucher potentielle.

5. Procédé selon l'une quelconque des revendications 1 à 4, dans lequel la zone d'entrée valide est obtenue à partir d'un toucher ou d'un passage sur le capteur du numériseur.

6. Procédé selon l'une quelconque des revendications 1 à 5, comprenant l'utilisation unique de la zone d'entrée valide pour une interaction entre un utilisateur et le numériseur.

7. Procédé selon l'une quelconque des revendications 1 à 6, dans lequel le capteur de numériseur comprend deux ensembles orthogonaux de lignes conductrices parallèles qui forment une pluralité de jonctions entre elles, de la part desquelles est reçue l'entrée.

8. Procédé selon la revendication 7, dans lequel l'entrée du capteur de numériseur est détectée par un procédé de détection de toucher capacitif.

9. Procédé selon la revendication 7 ou 8, comprenant la détection d'un modèle d'amplitudes de signaux à partir des lignes conductrices du capteur de numériseur ;
la formation d'une image en deux dimensions des amplitudes de signaux à partir du modèle d'amplitudes de signaux, les pixels de l'image correspondant à l'amplitude de signal au niveau de chacune des jonctions.

10. Procédé selon la revendication 9, comprenant: l'exécution d'une segmentation d'image sur l'image afin d'identifier la pluralité de zones discrètes.

11. Procédé selon l'une quelconque des revendications 7 à 10, dans lequel les dimensions des zones sont définies par au moins l'un du nombre de jonctions incluses dans les zones et du nombre de zones rectangulaires entourant les zones, les zones rectangulaires ayant des dimensions définies par un nombre de lignes conductrices sur chacun des axes orthogonaux à partir desquels une entrée utilisateur est détectée.

12. Procédé selon l'une quelconque des revendications 8 à 11, comprenant :
la classification de la zone de toucher potentielle comme étant la zone d'entrée valide ou la zone d'entrée invalide sur la base de la proximité déterminée et du niveau d'amplitude dans les zones, le niveau d'amplitude étant comparé avec une amplitude de référence des jonctions au sein des zones, l'amplitude de référence d'une jonction étant une amplitude au niveau de cette jonction en l'absence d'une entrée utilisateur ; et
dans lequel la zone de toucher potentielle est classifiée comme une zone d'entrée invalide en réponse au fait que la distance par rapport à la zone d'entrée de paume soit supérieure à une distance prédéfinie et que la zone de toucher potentielle comprenne des amplitudes supérieures aux amplitudes de référence.
